# EUROPÄISCHE PATENTANMELDUNG

(11) **EP 0 983 719 A2**
(43) Veröffentlichungstag der Anmeldung: **08.03.2000**
(21) Anmeldenummer: 99117134.9
(22) Anmeldetag: 31.08.1999
(51) Int. Cl.: A01D 87/10, A01D 51/00, A01D 84/00, A01G 1/12

(54) **Sauggebläse für die Aufnahme und Weitergabe von Mähgut, Kehrgut und dgl.**

(30) Priorität: 31.08.1998 DE 29815625 U; 24.08.1999 DE 29914757 U
(71) Anmelder: Wiedenmann GmbH, 89192 Rammingen (DE)
(72) Erfinder:
(74) Vertreter: Flügel, Otto, Dipl.-Ing.

(57) **Zusammenfassung**

Sauggebläse (5) für die Aufnahme und Weitergabe von Mähgut, Kehrgut und dergleichen im Anbau an Bodenbearbeitungsgeräte, insbesondere in der Größenordnung des kommunalen Geräteparks, wie Mähgeräte, Kehrgeräte, Laubsammelgeräte etc., mit einem mehrere, von einer Nabe (13) umfangsverteilt etwa radial abstehende Gebläseradflügel (12) aufweisenden Gebläserad (6) in einem im wesentlichen die Umlaufkontur der Flügel aufweisenden Gebläsegehäuse (9), das einen axialen Eingang (11) für das Luft-Gut-Gemisch und einen etwa senkrecht zu dem Eingang gerichteten, mit seiner radial äußeren Wandung an die Mantelwandung des Gebläsegehäuses etwa tangential abstrebend ausgebildeten Ausgang (10) für das Gemisch, welches Sauggebläse zum Zwecke einer geringeren Geräuschentwicklung und gegebenenfalls kleinerem Raumbedarf bei gleicher Förderleistung derart ausgebildet ist, daß bei gleicher konstant geförderter Luftmenge (v_{L}) das Gebläse (5) im Vergleich mit einem Gebläse herkömmlicher Bauart eine geringere Umfangsgeschwindigkeit (vᵤ) an den radial äußeren Enden der Gebläseradflügel (12) aufweist.

## Beschreibung

Die Erfindung betrifft ein Sauggebläse für die Aufnahme und Weitergabe von Mähgut, Kehrgut und dgl. im Anbau an landwirtschaftliche Geräte, insbesondere in der Größenordnung des kommunalen Geräteparks, wie Mähgeräte, Kehrgeräte, Laubsammelgeräte etc. mit einem mehrere, von einer Nabe umfangsverteilt etwa radial abstehende Gebläseradflügel aufweisenden Gebläserad in einem im wesentlichen die Umlaufkontur der Flügel aufweisenden Gebläsegehäuse, das einen axialen Eingang für das Luft-Gut-Gemisch und einen etwa senkrecht zu dem Eingang gerichteten, mit seiner radial äußeren Wandung an die Mantelwandung des Gebläsegehäuses etwa tangential abstrebend ausgebildeten Ausgang für das Gemisch.

Sehr häufig finden sich solche Sauggebläse oder kurz Gebläse - auch Turbinen genannt - derart angeordnet, daß sie das aufgenommene Gut in einen mitgeführten Sammelbehälter fördern. Dabei ist häufig das Gebläse und der Sammelbehälter insoweit zu einer Baueinheit zusammengefaßt, daß diese als Anhängefahrzeug oder als Aufsattelgerät an ein Zuggerät wie Kleintraktor anbaubar und von diesem aus antreibbar ist.

Die bisherige Vorstellung der Gestaltung eines solchen Gebläses ging dahin, das Gebläserad in ein verhältnismäßig schmales Gehäuse verhältnismäßig großen Durchmessers einzusetzen und nach diesem zu bemessen, u.a. um damit Bauraum in der Längsrichtung des Fahrzeugs zu sparen. Dabei ist die Lagerung des Flügelrades außerhalb der antriebseitigen Stirnseite des Gehäuses angeordnet, woran axial folgend an der Gebläseradwelle noch der Antrieb angreifen muß. Ein solches herkömmliches Gebläse muß darüber hinaus mit verhältnismäßig hoher Drehzahl angetrieben werden, um die erforderliche Förderleistung zu erbringen.

Der Erfindung liegt die Aufgabe zugrunde, ein solches Gebläse mit geringerer Geräuschentwicklung und gegebenenfalls weniger Raumbedarf bei gleicher Förderleistung zu schaffen.

Die Lösung dieser Aufgabe besteht im wesentlichen darin, daß bei gleicher konstant geförderter Luftmenge das Gebläse im Vergleich mit einem Gebläse herkömmlicher Bauart eine geringere Umfangsgeschwindigkeit an den radial äußeren Enden der Gebläseradflügel aufweist.

Für eine solche Herabsetzung der vorgenannten Umfangsgeschwindigkeit, die für die Geräuschentwicklung von gewichtiger Bedeutung ist, gibt es mehrere Möglichkeiten, die getrennt, kombiniert oder teilkombiniert vorgesehen sein können. So ist in einer ersten bevorzugten Ausführungsform die Breite der Gebläseradflügel größer bemessen als diejenige herkömmlicher Gebläse. Dies hat bei vergleichbarer geförderter Luftmenge und gleichbleibender Antriebsdrehzahl zur Folge, daß der Durchmesser des Gebläserades herabgesetzt werden kann, so daß die Umfangsgeschwindigkeit an den radial äußeren Kanten der Gebläseradflügel herabgesetzt wird. Man kann aber auch lediglich die Drehzahl des Gebläserades herabsetzen und müßte dann zur Aufrechterhaltung der geförderten Luftmenge gleicher Größenordnung die Breite der Gebläseradflügel vergrößern. Geht man von einer Verringerung des Durchmessers des Gebläserades aus, dann muß man zur Aufrechterhaltung der vergleichbar geförderten Luftmenge die Breite der Gebläseradflügel erhöhen und hat als zusätzlichen variablen Parameter die Antriebsdrehzahl des Gebläserades, jeweils im Sinne einer Herabsetzung der Umfangsgeschwindigkeit der radial äußeren Kanten der Gebläseradflügel. Dabei gibt die jeweils übereinstimmende Menge der geförderten Luft, also bei vorgegebenem Ansaugstutzendurchmesser die Strömungsgeschwindigkeit der angesogenen Luft bzw. des angesogenen Luft-Gut-Gemisches den Vergleichsmaßstab für die Betriebsparameter herkömmlicher Gebläse der in Rede stehenden Art.

In bevorzugter Ausführung wird derart vorgegangen, daß das Gebläse bei im Vergleich zu herkömmlichen Gebläsen konstantem Durchmesser des Gebläserades und natürlich als Vergleichsmaßstab gleichbleibender geförderter Luftmenge nach der Maßgabe bemessen und angetrieben ist, daß eine Erhöhung der axialen Breite der Gebläseradflügel um beispielsweise 10 % eine entsprechende Drehzahlreduzierung von etwa 5 % - 4,5 % - ermöglicht. Durch den konstanten Gebläseraddurchmesser und die verringerte Drehzahl ist die Bedingung einer Verringerung der Umfangsgeschwindigkeit an den radial äußeren Kanten der Gebläseradflügel erfüllt. Ein derart bemessenes Gebläse entwickelt weitaus geringere Betriebsgeräusche als herkömmliche Gebläse gleicher geförderter Luftmenge.

In weiterhin bevorzugter Ausführung wird die Bemessung der Gebläse derart vorgenommen, daß das Verhältnis von axialer Breite der Gebläseflügel zu Durchmesser des Gebläserades 1 zu 2-2,5 ist.

In besonders bevorzugter Ausführung wird baulich derart vorgegangen, daß die Drehlagerung des Gebläserades zumindest weitgehend in den axialen Abmessungsbereich des Gebläsegehäuses eingesetzt ist, insbesondere derart, daß die Drehlagerung des Gebläserades in einem von der antriebsseitigen Stirnwand oder auch Gebläsegehäuse-Antriebsrückwand gesehen sich axial in dessen Inneres erstreckenden Raum aufgenommen ist. Dabei wird in weiterhin bevorzugter Ausführung die Drehlagerung des Gebläserades in einen Hohlraum der Gebläseradnabe eingreifend, insbesondere zur Gänze in diesen aufgenommen, angeordnet.

Eine solche raumsparende Integrierung der Gebläseraddrehlagerung in den axialen Ausdehnungsbereich des Gebläses hinein ist besonders dann begünstigt, wenn die Breite der Gebläseradflügel und damit die axiale Ausdehnung des Gehäuses größer ist als bei herkömmlichen Gebläsen gleicher Förderleistung.

Zu diesem Zwecke ist bevorzugt die Mantelfläche der Gebläseradnabe von der Gebläsegehäuse-Ansaugöffnung bzw. dem über einen Ansaugstutzen angeschlossenen Saugschlauch aus gesehen zur antriebsseitigen Stirnseite des Gebläsegehäuses sich konisch, insbesondere kegelig, erweitemd ausgebildet, wobei diese Gebläseradnabe einen sich axial von der antriebsseitigen Stirnwand des Gebläsegehäuses zur Gebläsegehäuse-Ansaugöffnung hin konisch, insbesondere kegelig, verengenden Hohlraum aufweist, der die Drehlagerung des Gebläserades zumindest weitgehend aufnimmt. Dies kann bevorzugt derart geschehen, daß in den Hohlraum der Gebläseradnabe ein an der antriebsseitigen Stirnwandung des Gebläsegehäuses - Gebläsegehäuse-Antriebsrückwand - festgelegter Lagerdom hineinragt, der an seiner Innenwandung die äußeren Lagerschalen der insbesondere in Form zweier axial beabstandeter Wälzlager ausgebildeten Drehlagerung abstützt, an deren Innenschalen die Gebläseradwelle gehalten ist.

Diese konische Ausbildung der Gebläseradnabe begünstigt die Umleitung der mehr oder weniger axial strömend angesaugten Luft in Richtung des radial/tangentialen Austrittes.

Diese strömungsbegünstigende Wirkung kann dadurch verbessert werden, daß die Gebläseradnabe in ihrem abtriebsseitig axialen Endbereich einen radial abstrebenden Kranz aufweist. Diese günstige Luftströmungsführung kann dadurch weiter verbessert werden, daß die Gebläseradnabe sich von der Gebläsegehäuse-Antriebsrückwand her gesehen nur über einen Teilbereich der Gebläseradflügelbreite erstreckt und daß die Gebläseradflügel von der Gebläseradnabe ausgehend mit sich zur Ansaugöffnung hin erweiternd abgeschrägten Kanten ausgebildet sind.

Die Drehlagerung innerhalb der Gebläseradnabe wird vor Verschmutzungen vorzugsweise dadurch geschützt, daß zwischen der antriebsseitigen ringförmigen Berandung des Lagerdomes einerseits und einer entsprechend angepaßt ausgeformten antriebsseitigen ringförmigen Berandung der Gebläseradnabe andererseits eine Labyrinthdichtung ausgebildet ist. Im übrigen wird aufgrund der Fliehkraft im Betriebszustand des Gebläses zu förderndes Gut immer radial auswärts und somit aus dem Bereich der Drehlagerung heraus bewegt, wodurch deren Verschmutzung verhindert ist.

Bevorzugte Ausführungen der Erfindung, die weitgehend Merkmale der vorhergehenden Darlegungen enthalten, sind in den Unteransprüchen erfaßt. Dabei wird zusätzlich auf das am Ende der Figurenbeschreibung wiedergegebene Vergleichsbeispiel einer Ausführungsform nach der Erfindung mit einer solchen nach dem Stand der Technik ausdrücklich Bezug genommen.

Die Erfindung wird anhand des in der Zeichnung wiedergegebenen Ausführungsbeispieles nachstehend näher erläutert. Es zeigen
- Figuren 1 und 2: Schematische Seitenansicht und Ansicht in Bewegungsrichtung bei Anbau an ein Fahrzeug eines Ausführungsbeispieles des Sauggebläses im Zusammenbau mit einem Sammelbehälter für über das Sauggebläse angefördertes Gut;
- Figur 3: einen Schnitt durch die Drehachse des Gebläses.

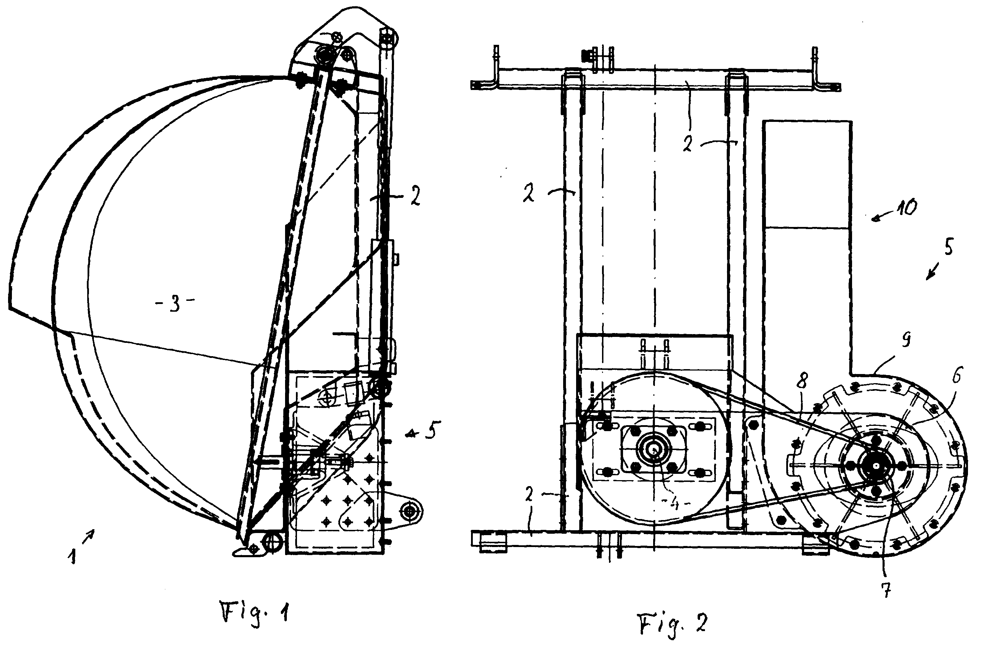

Die Ansichten nach den Figuren 1 und 2 eines insgesamt mit 1 bezeichneten Sammelbehälters, der als Aufsattelgerät auf ein kommunales Arbeitsfahrzeug konzipiert ist lassen ein Gestell 2, eine Falle 3 sowie einen Zapfwellenantrieb 4 erkennen wie dies dem Fachmann aus dem Stand der Technik in vielfältiger Weise bekannt ist. In nicht weiter erläuterter Art wird der Sammelbehälter mit seinem Gestell 2 über eine Dreigelenkanordnung oder dergleichen mit dem nicht dargestellten Fahrzeug derart verbunden, daß dessen Zapfsäule 4 in die aus Figur 2 ersichtliche Lage gerät. Dem Sammelbehälter 1 insgesamt und hinsichtlich der Halterung dem Gestell 2 ist ein insgesamt mit 5 bezeichnetes Gebläse zugeordnet, das ein Gebläserad 6 aufweist, an dessen Welle verdrehfest ein Keilriemenrad 7 angeordnet ist, das seinerseits über einen Keilriemen - auch mehrere parallel - mit einem entsprechenden gestellseitigen Keilriemenrad verbunden ist, das die Keilwelle im Betriebszustand antreibt. Das Gebläserad 6 des Gebläses 5 ist demnach in grundsätzlich bekannter Weise vom Trägerfahrzeug aus über dessen Motor und abgehender Zapfwelle 4 antreibbar.

Das Gebläserad 6 des Gebläses 5 ist in grundsätzlich bekannter Weise von einem Gebläse-gehäuse 9 umgeben, das über den Großteil seines Mantelverlaufes mit geringem Abstand vom radialen Umfang des Gebläserades 6 beabstandet dieses aufnimmt. Wie aus Figur 2 ersichtlich, mündet die Mantelwandung des Gebläsegehäuses 9 in einen tangential abstrebenden Gebläsegehäuse-Abblasstutzen 10, wie dies bei den Gebläsen der in Rede stehenden Art bekannt ist.

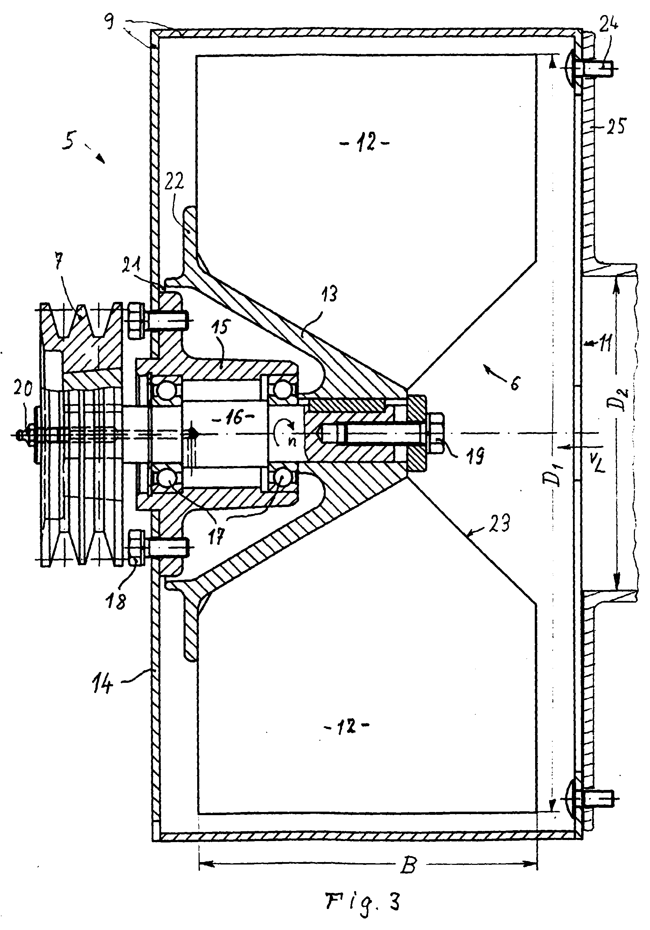

Wie ebenfalls bekannt, wird die von dem Gebläse zu fördernde Luft bzw. das mit dem aufzunehmenden Gut befrachtete Luft-Gut-Gemisch an der von der Antriebsseite axial abgewandten Seite her dem Gebläse zugeführt, und zwar über eine axiale Öffnung des Gebläsegehäuses 9, die hier durch den Flansch eines Ansaugstutzens 25 dadurch definiert ist, daß dieser die fast völlig offene Stirnseite des Gebläsegehäuses an dieser Eingangsseite übergreift, wie dies Figur 3 erkennen läßt. Das durch die insoweit umrissene Gebläsegehäuse-Ansaugöffnung 11 aufgrund der Sogwirkung des angetriebenen Gebläserades 6 mit seinen radial abstehenden Gebläseradflügeln 12 eintretende Luft-Gut-Gemisch wird an der Gebläseradnabe 13 und im Bereich der später noch erwähnten Flügelkanten 23 in radiale Richtung umgelenkt. Zu diesem Zwecke ist in der dargestellten Ausführungsform die Gebläseradnabe 13 sich tiegelförmig zur Gebläsegehäuse-Antriebsrückwand 14 erweiternd ausgebildet und nimmt in ihrem insoweit entsprechenden Innenraum einen Lagerdom 15 auf, an dessen Innenwandung die Außenschalen zweier Wellenlager 17 - Wälzlager - abgestützt sind, die in bekannter Weise mit ihren Innenschalen auf der Gebläseradwelle 16 sitzen, so daß diese über die Lager 17 an dem Lagerdom 15 abgestützt ist, der seinerseits mittels Wellendomschrauben 18 an der Gebläsegehäuse-Antriebsrückwand ortsfest gehalten ist. Auf das von der Gebläsegehäuse-Antriebsrückwand ins Innere des Gebläsegehäuses 9 über einen Teilbereich vorragende Ende der Gebläseradwelle 16 ist über eine Keilverbindung die Nabe 13 des Gebläserades 6 aufgesetzt und mittels einer Schraube 19 in dieser verdrehfesten Lage arretiert. An dem anderen antriebsseitigen Ende der Gebläseradwelle 16 ist wiederum keilverzahnt das Keilriemenrad 7 des Gebläserades 6 aufgesetzt und mittels einer Schraube bei 20 befestigt.

Zwischen dem ringsumlaufenden Flansch des Lagerdomes 15, der an der Gebläsegehäuse-Antriebsrückwand befestigt ist, und dem dieser Rückwand zugewandten axialen Ende der Gebläseradnabe 13 ist dadurch eine Labyrinthdichtung 21 gebildet, das die Berandung des Domes 13 die Umfangsfläche des Flansches des Lagerdomes 15 mit radial geringem Abstand umgibt und mit axial geringem Abstand vor der Antriebsrückwand 14 endet. Diese Labyrinthdichtung verhindert weitgehend den Eintritt verschmutzenden Gutes in den die Drehlagerung 17 aufnehmenden Lagerdominnenraum, der im übrigen durch die im Betrieb auftretende Zentrifugalkraft bereits weitgehend geschützt ist.

Um die Strömungsumleitung von der generell axialen Strömungsrichtung durch die Ansaugöffnung 11 hin zur generell radialen Strömungsrichtung im Bereich der Gebläseradflügel 12 und dann die tangentiale Ableitung durch den Ausblasstutzen 10 zu verbessern ist nicht nur der kegelförmige Mantel der Gebläseradnabe 13 vorgesehen, sondern auch ein sich an dessen antriebsseitigem Endbereich befindende, radial abstrebende Kranz 22. Desweiteren sind an den Gebläseradflügeln 12 Kanten 23 vorgesehen, die sich von der im Inneren des Gebläsegehäuses 9 beabstandet von dem Flansch des Ansaugstutzens 25 endenden Gebläseradnabe zum Flansch 25 hin erweiternd ausgebildet sind, so daß sich ein in der aus Figur 3 ersichtlichen Weise gestalteter Einlaufraum für das angesogene Gut ergibt.

Für einen Vergleich mit einem herkömmlichen Gebläse der in Rede stehenden Art aus dem Hause der Anmelderin ist die bevorzugte Ausführungsform des Gebläses 5 im axialen Längsschnitt gemäß Figur 3 hinsichtlich der Gebläseradflügel 12 durch deren Breite mit B, hinsichtlich diametral gegenüberliegender Gebläseradflügel 12 und damit dem Durchmesser des Gebläserades 6 mit D₁, der Drehzahl des Getrieberades 6 mit n und dem lichten Durchmesser des Ansaugstutzens 25 insoweit als Maßgabe für die Getriebegehäuse-Ansaugöffnung 11 mit D₂ bezeichnet. Die Umfangsgeschwindigkeit v_{U} an den radial äußeren Kanten ist in der Zeichnung nicht gesondert angezeigt. Unter Bezugnahme auf diese Parameter stellt sich der Vergleich wie folgt dar:
Gemeinsame Parameter:
Das Gebläserad 6 weist über seinen Umfang gleichmäßig verteilt sechs Gebläseradflügel 12 auf. Der Durchmesser des Gebläserades beträgt 480 mm. Durch den Ansaugstutzen mit einer lichten Weite von 200 mm strömt in beiden Getriebeausführungen dieselbe Luftmenge v_{L} gleich 35 m/sec.

Aufgrund dieser baulich übereinstimmenden Umstände eines gleichen Gebläseraddurchmessers mit jeweils sechs Flügeln pro Gebläserad sowie eines übereinstimmenden Durchmessers der Innenwandung der Ansaugstutzen wird jeweils eine übereinstimmend geförderte Luftmenge von 35 m/sec erreicht,
- zum einen: bei einem herkömmlichen Gebläse aus dem Hause der Mandantin mit
einer Breite der Gebläseradflügel B = 160 mm
und einer Antriebsdrehzahl n = 2368 U/min
entsprechend einer Umfangsgeschwindigkeit der radial äußeren Flügelkanten v_{U} = 59 m/sec,
- zum anderen: bei einer Ausführungsform gemäß Figur 3 mit
einer Breite der Gebläseradflügel B = 220 mm
und einer Antriebsdrehzahl n = 1955 U/min
entsprechend einer Umfangsgeschwindigkeit der radial äußeren Flügelkanten v_{U} = 49 m/sec.

Es wird also bei konstanter Luftmenge und konstantem Gebläseraddurchmesser erreicht, daß sich bei 60 mm breiteren Gebläseradflügeln die für die gleiche Förderleistung erforderliche Drehzahl n des Gebläserades um ca. 400 U/min verringert. Diese Verringerung ist für die Geräuschentwicklung des Gebläses von entscheidender Bedeutung.

### Bezugszeichenliste

- 1: Sammelbehälter (als Aufsattelgerät)
- 2: Gestell
- 3: Falle
- 4: Zapfwellenantrieb mit Keilriemenrad
- 5: Gebläse
- 6: Gebläserad
- 7: Keilriemenrad des Gebläserades
- 8: Keilriemen
- 9: Gebläsegehäuse
- 10: Gebläsegehäuse - Ausblasstutzen
- 11: Gebläsegehäuse - Ansaugöffnung
- 12: Gebläseradflügel
- 13: Gebläseradnabe
- 14: Gebläsegehäuse - Antriebsrückwand
- 15: Lagerdom
- 16: Gebläseradwelle
- 17: Wellenlager
- 18: Wellendomschrauben
- 19: Befestigungsschrauben Gebläserad - Welle
- 20: Befestigung Keilriemenrad
- 21: Labyrinthdichtung
- 22: Kranz (der Nabe)
- 23: Kanten (der Gebläseradflügel)
- 24: Befestigungsbolzen
- 25: Ansaugstutzen
- B: axiale Breite der Gebläseradflügel
- D₁: Durchmesser der Gebläseradflügel
- D₂: Innendurchmesser des Ansaugstutzens
- n: Drehzahl des Gebläserades
- v_{L}: gefördertes Luftvolumen in m/sec
- vᵤ: Umfangsgeschwindigkeit am Außenrand von 12

## Patentansprüche

1. Sauggebläse (5) für die Aufnahme und Weitergabe von Mähgut, Kehrgut und dergleichen im Anbau an Bodenbearbeitungsgeräte, insbesondere in der Größenordnung des kommunalen Geräteparks, wie Mähgeräte, Kehrgeräte, Laubsammelgeräte etc., mit einem mehrere, von einer Nabe (13) umfangsverteilt etwa radial abstehende Gebläseradflügel (12) aufweisenden Gebläserad (6) in einem im wesentlichen die Umlaufkontur der Flügel aufweisenden Gebläsegehäuse (9), das einen axialen Eingang (11) für das Luft-Gut-Gemisch und einen etwa senkrecht zu dem Eingang gerichteten, mit seiner radial äußeren Wandung an die Mantelwandung des Gebläsegehäuses etwa tangential abstrebend ausgebildeten Ausgang (10) für das Gemisch,
**dadurch gekennzeichnet,**
daß bei gleicher konstant geförderter Luftmenge (v_{L}) das Gebläse (5) im Vergleich mit einem Gebläse herkömmlicher Bauart eine geringere Umfangsgeschwindigkeit (vᵤ) an den radial äußeren Enden der Gebläseradflügel (12) aufweist.

2. Sauggebläse nach Anspruch 1,
**dadurch gekennzeichnet,**
daß die axiale Breite (B) der Gebläseradflügel (12) größer ist als diejenige herkömmlicher Gebläse.

3. Sauggebläse nach Anspruch 1 oder 2,
**dadurch gekennzeichnet,**
daß die Drehzahl (n) des Gebläserades (6) im Vergleich zu derjenigen eines herkömmlichen Gebläses niedriger ist.

4. Sauggebläse nach einem der Ansprüche 1 bis 3,
**dadurch gekennzeichnet,**
daß der Durchmesser (D₁) des Gebläserades (6) - die Außenumfangsbahn der Gebläseradflügel (12) - kleiner bemessen ist als bei herkömmlichen Gebläsen.

5. Sauggebläse nach den Ansprüchen 2 und 3,
**dadurch gekennzeichnet,**
daß bei gleichbleibendem Gebläseraddurchmesser (D₁) eine Erhöhung der axialen Gebläseradflügelbreite (B) um ca. 10 % mit einer Verringerung der Gebläseraddrehzahl (n) von ca. 5 % einhergeht.

6. Sauggebläse nach Anspruch 2 und 4,
**dadurch gekennzeichnet,**
daß das Verhältnis von der axialen Breite (B) der Gebläseradflügel (12) zu dem Gebläseraddurchmesser (D₁) 1 zu 2 bis 2,5 ist.

7. Sauggebläse nach einem der Ansprüche 1 bis 6,
**dadurch gekennzeichnet,**
daß die Drehlagerung (17) des Gebläserades (6) zumindest weitgehend in den axialen Abmessungsbereich des Gebläsegehäuses (9) eingesetzt ist.

8. Sauggebläse nach einem der Ansprüche 1 bis 7,
**dadurch gekennzeichnet,**
daß die Drehlagerung (17) des Gebläserades (6) in einem von der antriebsseitigen Stirnwand (14) des Gebläsegehäuses (9) sich axial in dessen Inneres erstreckenden Raum aufgenommen ist.

9. Sauggebläse nach Anspruch 7 oder 8,
**dadurch gekennzeichnet,**
daß die Drehlagerung (17) des Gebläserades (6) in einen Hohlraum der Gebläseradnabe (13) eingreifend, insbesondere praktisch zur Gänze in diesen aufgenommen, angeordnet ist, welche Gebläseradnabe (13) von ihrer Mantelwandung abstrebend die Gebläseradflügel (12) trägt.

10. Sauggebläse nach einem der Ansprüche 1 bis 9,
**dadurch gekennzeichnet,**
daß die Mantelfläche der Gebläseradnabe (13) von der Gebläsegehäuse-Ansaugöffnung (11) aus gesehen zur antriebsseitigen Stirnseite des Gebläsegehäuses (9) sich konisch - insbesondere kegelig - erweiternd ausgebildet ist.

11. Sauggebläse nach Anspruch 9 oder 10,
**dadurch gekennzeichnet,**
daß die Gebläseradnabe (13) einen sich axial von der antriebsseitigen Stirnwand (14) des Gebläsegehäuses (9) zur Gebläsegehäuse-Ansaugöffnung (11) hin konisch - insbesondere kegelig - verengenden Hohlraum aufweist, der die Drehlagerung (17) des Gebläserades (6) zumindest weitgehend aufnimmt.

12. Sauggebläse nach einem der Ansprüche 8 bis 11,
**dadurch gekennzeichnet,**
daß in den Hohlraum der Gebläseradnabe (13) ein an der antriebsseitigen Stirnwandung (14) des Gebläsegehäuses (9) festgelegter Lagerdom (15) hineinragt, der an seiner Innenwandung die äußeren Lagerschalen der - insbesondere als zwei axial beabstandete Wälziager ausgebildeten - Drehlagerung (17) abstützt, deren Innenschalen die Gebläseradwelle (16) halten.

13. Sauggebläse nach Anspruch 12,
**dadurch gekennzeichnet,**
daß zwischen den antriebsseitigen Berandungen des Lagerdomes (15) einerseits und der Gebläseradnabe (13) andererseits eine Labyrinthdichtung (21) ausgebildet ist.

14. Sauggebläse nach einem der Ansprüche 1 bis 13,
**dadurch gekennzeichnet,**
daß die Gebläseradnabe (13) in ihrem antriebsseitig axialen Endbereich einen radial abstrebenden Kranz (22) aufweist, der in Zusammenwirkung mit der Mantelwandung der Gebläseradnabe (13) eine Luftführung für die durch die Gebläsegehäuse-Ansaugöffnung (11) etwa axial einströmende Förderluft in radiale Richtung zum Gebläsegehäuse-Ausblasstutzten (10) umleitet.

15. Sauggebläse nach einem der Ansprüche 1 bis 14,
**dadurch gekennzeichnet,**
daß die Gebläseradnabe (13) sich von der Antriebsseite (14) her gesehen nur über einen Teilbereich der Gebläseradflügelbreite (B) erstreckt und daß die Gebläseradflügel (12) von der Gebläseradnabe (13) ausgehend zur Gebläsegehäuse-Ansaugöffnung (11) mit sich erweiternd abgeschrägten Kanten (23) ausgebildet sind.
